# EUROPEAN PATENT APPLICATION

(11) **EP 4 535 097 A1**
(43) Date of publication of application: **09.04.2025**
(21) Application number: 23383018.1
(22) Date of filing: 03.10.2023
(51) Int. Cl.: G05B 13/02, G05B 13/04, G06N 20/00, G05B 19/418, G06N 3/08

(54) **CONTROLLING A DISCONTINUOUS MANUFACTURING PROCESS**

(71) Applicant: Fundació Eurecat, 08290 Cerdanyola del Vallès (ES); Universitat de Barcelona, 08028 Barcelona (ES)
(72) Inventor: ABÍO ROJO, Albert, 08395 SANT POL DE MAR (ES); NIEVAS VIÑALS, Nuria, 25003 LLEIDA (ES); BONADA BO, Francesc Xavier, 08339 VILASSAR DE DALT (ES); ECHEVERRIA ROVIRA, Lluís, 25132 BENAVENT DE SEGRIÀ (ES); PUJOL VILA, Oriol, 08025 BARCELONA (ES); DOMINGO ALBIN, Javier Juan, 25110 ALPICAT (ES); SOUZA BORGES DOS SANTOS, Danillo Lange, 25002 LLEIDA (ES)
(74) Representative: ZBM Patents - Zea, Barlocci & Markvardsen

(57) **Abstract**

A method of controlling a discontinuous manufacturing process and a system for controlling a discontinuous manufacturing process are provided. The method includes configuring a first computing module or system that implements a Surrogate Model, SM, reconfiguring the first computing module by retraining, the trained SM; configuring a second computing module that implements a Reinforcement Learning Model, RLM; and controlling the discontinuous manufacturing process.

## Description

The present disclosure relates to methods of controlling a discontinuous manufacturing process, and to systems and computer programs suitable for performing said methods.

### BACKGROUND

Different techniques or approaches for automatically controlling manufacturing processes are known in the prior art. Some of them have been recognized as key technologies in the autonomous control of manufacturing systems or lines, since they permit monitoring the manufacturing line in a decision-making process with the final objective of optimizing the performance of the line.

Manufacturing line performance may be quantitatively and/or qualitatively expressed and assessed through KPls. Optimization of properly defined performance KPIs may provide interesting advantages from line performance perspective. Examples of performance KPIs may include, e.g., time elapsed to produce final piece or product, time elapsed to complete manufacturing steps, quality of the manufactured piece or product according to quality requirements, etc.

However, prior art techniques aimed at implementing a reliable control of a manufacturing line have a high cost as they may require exploring a high dimensionality parameter space which is often unfeasible in an actual industrial plant. Alternatives to using data from actual manufacturing line for control implementation may be based on using data from simulations such as, e.g., Finite Element simulations. Obtaining simulation data may also be very time consuming as complete simulations of the manufacturing process may also have a very high computational cost.

Discontinuous production may be defined as a manufacturing process in which products are produced in distinct units or groups, i.e., as a cyclic manufacturing process with each production cycle covering production of a single of the units or groups. In discontinuous production, its self-regulated control may allow not only the optimization of the current process through the actions taken by the implemented automatic control but, furthermore, the optimization of the processes or cycles to come, leading to a global optimization of the batches or all the units produced.

An object of this disclosure is to provide new methods, systems and computer programs aimed at improving prior art manners of controlling a discontinuous manufacturing process.

### SUMMARY

In an aspect, methods are provided of controlling a discontinuous manufacturing process performed by or at a manufacturing line that is configurable via settings and the manufacturing line having operational states during the performing of the manufacturing process, each of said operational states being defined by operational parameters measurable at the manufacturing line.

In the context of the present application, operational states defined by operational parameters comprise an assembly or set of parameters defining a state. For example, an operation state may comprise an assembly of temperature of materials and remaining time of manufacture.

The methods of controlling a discontinuous manufacturing process comprise configuring a first computing module or system that implements a Surrogate Model, SM, said configuring based on training the SM using dataset pairs produced by a simulation of the manufacturing line performing the manufacturing process, each of said dataset pairs including an input dataset comprising an initial operational state and settings of the simulated manufacturing line and an output dataset comprising a result of the manufacturing process produced by the simulation from said operational state and settings, the result comprising a final operational state.

The methods of controlling a discontinuous manufacturing process comprise reconfiguring the first computing module by retraining, based on applying transfer/continual learning, the trained SM using dataset pairs produced by an actual production line performing the manufacturing process, each of said dataset pairs including an actual input dataset comprising an actual initial operational state and actual settings of the actual production line and an output dataset comprising an actual result of the manufacturing process produced by the actual production line based on the actual operational state and the actual settings, the actual result comprising an actual final operational state.

The reconfiguring using an actual initial operational state, actual settings and an actual result provides a SM which is optimized for a set of parameters representing or matching the real behaviour of the actual manufacturing line or manufacturing process. The simulation allows testing the system with parameters which may be out of operational parameters of a manufacturing line but allows simulating at limits of what may represent limiting situations for a manufacturing line. The simulation further allows training the SM with more iterations than the case where only actual data are used, and allows saving materials, human working hours, and so on. The reconfiguring with actual or real datasets allows fine-tuning the SM with a range of values of parameters and thus, improve the performance of the SM within the range.

The methods of controlling a discontinuous manufacturing process comprise configuring a second computing module or system that implements a Reinforcement Learning Model, RLM, said configuring based on training the RLM using the retrained SM, the training the RLM including iteratively receiving, by the RLM, an operational state produced by the SM, receiving, by the RLM, a reward, and producing, by the RLM, produced settings to be provided to the SM; receiving by the SM the produced settings; providing, by the SM, a new operational state based on the produced settings, to be received by the RLM; and receiving by the RLM a new reward feedback;
wherein the new reward feedback indicates whether the new operational state produced by the SM and the produced settings satisfy a reward function optimization criterion.

In the present disclosure, the fact that the new reward feedback indicates whether the new operational state produced by the SM and the produced settings satisfy a reward function optimization criterion may comprise that the new reward feedback indicates that the manufacturing process is performing in a desired direction. A reward function may comprise a function representing the evolution of a manufacturing process. The evolution of the manufacturing process may be optimized. The new reward may indicate that the reward function optimization is being optimized or that the parameters making up the new operational state are evolving such that the reward function is being optimized, maybe by steps of iterations. The reward may be cumulative reward. In some examples the methods of the disclosure try to maximize an expected cumulative reward. One of the purposes of the RLM is to produce optimal settings, or nearly-optimal settings that optimize the reward function, i.e., that minimize, or that maximize the reward function. The reward function may be defined for each manufacturing line or may comprise a parameter or a list of parameters, or may be provided by an interpreter, or quality prediction system or may be user-provided.

In examples, during training, the reward is estimated or calculated based on the output from the SM and the reward is received by the RLM.

In examples, during training, the reward is a cost function computed from the outputs of the SM.

The methods of controlling a discontinuous manufacturing process comprise controlling the discontinuous manufacturing process by performing iterations of:
during operation, receiving operational states defined by operational parameters measured by sensors at the manufacturing line by the configured second computing module;
outputting, by the second computing module, settings to be applied, and
configuring the manufacturing line based on the settings to be applied.

The configuring of the manufacturing line based on the settings to be applied is performed during operation and is applied following the policies learnt during training or configuration of the RLM.

In examples, during operation, the reward is estimated or calculated bases on data extracted from the manufacturing line, for example, from quality data or from sensors.

In aspects of the present disclosure, alternative methods are provided of controlling a discontinuous manufacturing process performed by or at a manufacturing line that is configurable via settings and the manufacturing line having operational states during the performing of the manufacturing process, each of said operational states being defined by operational parameters measurable at the manufacturing line.

The alternative methods of controlling a discontinuous manufacturing process comprise configuring a first computing module or system that implements a Surrogate Model, SM, said configuring based on training the SM, using dataset pairs produced by an actual production line performing the manufacturing process, each of said dataset pairs including an actual input dataset comprising an actual initial operational state and actual settings of the actual production line and an output dataset comprising an actual result of the manufacturing process produced by the actual production line based on the actual operational state and the actual settings, the actual result comprising an actual final operational state.

The alternative methods of controlling a discontinuous manufacturing process comprise reconfiguring the first computing module by retraining the SM based on applying transfer/continual learning using dataset pairs produced by a simulation of the manufacturing line performing the manufacturing process, each of said dataset pairs including an input dataset comprising an initial operational state and settings of the simulated manufacturing line and an output dataset comprising a result of the manufacturing process produced by the simulation from said operational state and settings, the result comprising a final operational state.

The alternative methods of controlling a discontinuous manufacturing process comprise configuring a second computing module or system that implements a Reinforcement Learning Model, RLM, said configuring based on training the RLM using the retrained SM, the training the RLM including iteratively receiving, by the RLM, an operational state produced by the SM, receiving a reward by the RLM, and producing, by the RLM, produced settings to be provided to the SM;
receiving by the SM the produced settings;
providing, by the SM, a new operational state based on the produced settings, to be received by the RLM;
receiving a new reward feedback by the RLM;
wherein the new reward feedback indicates whether the new operational state produced by the SM and the produced settings satisfy a reward function optimization criterion.

The alternative methods of controlling a discontinuous manufacturing process comprise controlling the discontinuous manufacturing process by performing iterations of:
receiving operational states defined by operational parameters measured by sensors at the manufacturing line, by the configured second computing module;
outputting, by the second computing module, settings to be applied, and
configuring the manufacturing line based on the settings to be applied.

As argued in other parts of the disclosure, the combination of training the SM using simulation data, retraining afterwards the SM using actual data, or vice versa, and training further afterwards the RLM using the (trained and retrained) SM provides more efficiency and good/acceptable accuracy in the context of controlling a manufacturing line, in comparison to prior art approaches with same or similar purpose.

The method may be implemented periodically in a manufacturing line. For example, the training of the SM and/or the retraining of the SM and/or the training of the RLM may be performed periodically. For example, during some months or during one or several years implementing the iterative steps of "controlling the discontinuous manufacturing process", new production data may be generated, and new production data may then be used for retraining the SM, re-retraining the SM and retraining the RLM. The SM and the RLM may therefore be improved.

The Surrogate Model may be an Artificial Intelligence based (Al-based) Surrogate Model implementable or implemented computationally, i.e., by/with computer or computers. The methods of the disclosure provide SM which model a mapping from pairs of operational states and settings to results of the manufacturing process.

In examples, the RLM receives reward feedback and the new reward feedback from the SM. In examples, the RLM receives reward feedback and the new reward feedback from the manufacturing line, during operation. In examples, the RLM receives reward feedback and the new reward feedback from a quality prediction system.

In examples, configuring the second computing module comprises
iteratively receiving, by the RLM, and in a current iteration, an operational state and reward feedback produced by the SM in a previous iteration;
iteratively producing, by the RLM, produced settings to be provided to the SM in the current iteration; and
iteratively providing, by the SM, a new operational state and a new reward feedback based on the produced settings, in a following iteration.

In examples, the simulation may be any type of mathematical or analytical or mechanistic simulation that permits reproducing or virtually performing the manufacturing process computationally such as, e.g., a Finite Element simulation or a Numerical simulation or a Computational Fluid Dynamics simulation or any combination thereof.

In some cases, the dataset pairs produced by the simulation may correspond to a number of dataset pairs, and the dataset pairs produced by the actual production line may correspond to a quantity of dataset pairs which may be less than the number of dataset pairs. In other words, training data from simulation may be (much) more substantial or abundant than training data from actual manufacturing line. As commented in other parts of the disclosure, number of simulation data may be less than quantity of actual data in certain scenarios.

In some implementations, the configuring and/or the reconfiguring of the first computing module may be performed based on Supervised Machine Learning models, or Generative Models, or Unsupervised Machine Learning models, or any combination thereof.

According to examples, the applying of transfer/continual learning may comprise or be based on fine-tuning, domain adaptation, Generative Model or any combination thereof. Fine-tuning approach may include performing a fine-tuning of the Surrogate Model (that has been previously trained using the dataset pairs from the simulation) using the dataset pairs from the actual production line. Domain adaptation approach may include performing a domain adaptation to align distributions between the dataset pairs from the simulation and the dataset pairs from the actual production line. Domain adaptation may comprise parameter adaptation to actual parameters. Generative Model approach may include retraining the Surrogate Model based on a Generative Model for it to learn knowledge on distribution of the dataset pairs from the actual production line and to transfer said knowledge to the Surrogate Model (that has been previously trained using the dataset pairs from the simulation).

Fine-tuning may be part of a whole strategy which may be denominated pre-training and fine-tuning approach. In this approach, such a pre-training may correspond to the training of the SM performed by/at the first configuration module 101, and the fine-tuning may correspond to the retraining performed by/at the reconfiguration module 102.

In control methods according to examples, the controlling of the discontinuous manufacturing process by performing iterations may further include receiving, at each of the iterations, a reward value or values representing costs or performance of the manufacturing process. The reward values received throughout the iterations may define a reward function of the manufacturing process. In examples, a reward is received at each iteration. The reward may represent a value output from a cost function. The cost function may include several key performance indicators, or KPI.

In examples, in each iteration -or cycle- several costs are added to a single reward (result of the reward function of the manufacturing process). At each cycle a new reward is calculated. In such examples, the result of the reward function corresponds to a cycle, not to the manufacturing process. The RLM optimizes the manufacturing process based on the aggregation of the reward of all the cycles of the manufacturing process.

In examples, the configuring of the second computing module by training the Reinforcement Learning Model using the previously retrained Surrogate Model may be performed further considering a reward function (as defined in other parts of the disclosure), and the providing of the operational measurements to the second computing module may further comprise providing thereto the reward calculated based on one value or based on several values received at the previous iteration.

Implementations using a reward function may be herein denominated implementations according to reward approach.

In some cases, the configuring of the second computing module by training the Reinforcement Learning Model may be performed as an optimization process constrained by the (retrained) Surrogate Model and with maximization of the reward function as objective, and the second computing module may be provided with the reward calculated based on one value or based on several values received at previous iteration for it to produce setting values attempting to optimize the reward function at present (an subsequent) iteration(s).

In some implementations, the discontinuous manufacturing process may include closure and opening of a die in hot stamping of metal sheets to form a final piece. In these hot stamping implementations, the operational parameters defining the operational states may include temperature of the metal sheet when it reaches the die, temperature of the die at same time the metal sheet reaches the die, and number of remaining metal sheets in current batch, and the setting parameters through which the manufacturing line is configurable may include closure time of the die. The closure time may depend on the final piece to be formed.

In (control) methods of controlling closure and opening of a die in hot stamping, a reward function may be further taken into account depending on, e.g., time of formation of the final piece and/or on whether the final piece is manufactured within or outside a temperature threshold constraint.

In a further aspect, systems are provided for controlling a discontinuous manufacturing process performed by (or at) a manufacturing line that is configurable via setting parameters and has operational states that are experienceable by the production line during the performing of the manufacturing process, each of said operational states being defined by operational parameters measurable at the manufacturing line. Such systems (also denominated control systems herein) comprise a first configuration module, a reconfiguration module, a second configuration module and a control module.

The first configuration module is adapted (or configured) to configure a first computing module or system that implements a Surrogate Model, SM, said configuring based on training the SM using dataset pairs produced by a simulation of the manufacturing line performing the manufacturing process, each of said dataset pairs including an input dataset comprising an initial operational state and settings of the simulated manufacturing line and an output dataset comprising a result of the manufacturing process produced by the simulation from said operational state and settings, the result comprising a final operational state.

The reconfiguration module is adapted (or configured) to reconfigure the first computing module by retraining, based on applying transfer/continual learning, the trained SM using dataset pairs produced by an actual production line performing the manufacturing process, each of said dataset pairs including an actual input dataset comprising an actual initial operational state and actual settings of the actual production line and an output dataset comprising to an actual result of the manufacturing process produced by the actual production line based on the actual operational state and the actual settings, the actual result comprising an actual final operational state.

The second configuration module is adapted (or configured) to configure a second computing module or system that implements a Reinforcement Learning Model, RLM, said configuring based on training the RLM using the retrained SM, the training the RLM including iteratively receiving, by the RLM, an operational state produced by the SM, receiving, by the RLM, a reward based on the outputs of the SM, and producing, by the RLM, produced settings to be provided to the SM; receiving by the SM the produced settings; providing, by the SM, a new operational state based on the produced settings, to be received by the RLM; receiving a new reward feedback by the RLM; wherein the new reward feedback indicates whether the new operational state produced by the SM and the produced settings satisfy a reward function optimization criterion.

The control module is configured to control the discontinuous manufacturing process by performing iterations of:
receiving operational states defined by operational parameters measured by sensors at the manufacturing line, by the configured second computing module;
outputting, by the second computing module, settings to be applied, and
configuring the manufacturing line based on the settings to be applied.

Control systems are suitable or configured to perform control methods proposed herein, so same or similar functional principles and advantages as the ones described with reference to control methods may be attributed to such control systems.

In a still further aspect, computer programs are provided comprising program instructions for causing a system or computer system or controller to perform (control) methods of controlling a discontinuous manufacturing process, such as those described in other parts of the disclosure. These computer programs (also denominated control computer programs herein) may be embodied on a storage medium and/or carried on a carrier signal. Control computer programs are suitable or configured to perform control methods proposed herein, so same or similar functional fundamentals and advantages as the ones described with reference to control methods may be attributed to such control computer programs.

In a yet further aspect, computing systems are provided for controlling a discontinuous manufacturing process, said computing systems comprising a memory and a processor, embodying instructions stored in the memory and executable by the processor, and the instructions comprising functionality or functionalities to execute methods of controlling a discontinuous manufacturing process, such as those described in other parts of the disclosure. Such computing systems (also denominated control computing systems herein) are suitable or configured to perform control methods described herein, so same or similar functional principles and advantages as the ones described with reference to control methods may be attributed to such control computing systems.

According to examples, manufacturing lines may also be provided comprising a control system or control computing system for controlling a discontinuous manufacturing process performed by or at the manufacturing line, such as the ones described in other parts of the disclosure.

### BRIEF DESCRIPTION OF THE DRAWINGS

Non-limiting examples of the disclosure will be described in the following, with reference to the appended drawings, in which:
Figure 1 is a block diagram schematically illustrating systems for controlling a discontinuous manufacturing process according to examples.
Figure 2 is a flow chart schematically illustrating methods of controlling a discontinuous manufacturing process according to examples.

### DETAILED DESCRIPTION OF EXAMPLES

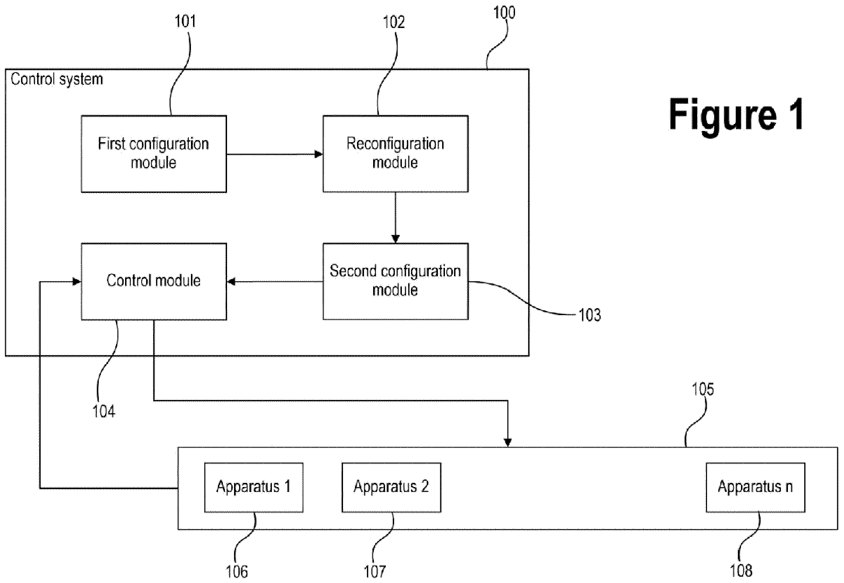

Figure 1 is a block diagram schematically illustrating systems 100 for controlling a discontinuous manufacturing process performed by (or at) a manufacturing line 105. The manufacturing line 105 may have or experience operational states which may be defined each by operational parameters that may be measured at the manufacturing line 105. The manufacturing line 105 may have apparatuses 106 - 108 that are configurable via or through setting parameters. As shown in the figure, control systems 100 may include a first configuration module 101, a reconfiguration module 102, a second configuration module 103 and a control module 104.

Parameters defining operational states may include any classes of parameters automatically measurable by sensors or similar artefacts at the production line 105. Examples of such operational parameters may be, e.g., production time, execution time of production steps, energy consumption, temperature achieved during whole production cycle or particular steps in the cycle, applied or resulting pressure, closure and opening time of a device with such a function, etc. Quality-related parameters that are measurable automatically at manufacturing line 105 may also be considered. Any skilled person knows very well which operational parameters may be defined and are usable in a particular manufacturing line 105 depending on the product or pieces to be produced, technical specifications of the manufacturing line 105, etc. Hence, no deep details in this respect are provided in the present disclosure.

Same or similar considerations as the ones provided before regarding operational parameters may be generally and conceptually applied to apparatuses 106 - 108 forming the manufacturing line 105, and to setting parameters to configure the apparatuses 106 - 108. Any skilled person knows very well which apparatuses and setting parameters thereof are usable in (or may form) a particular manufacturing line 105 depending on the product or piece to be produced, technical specs of the manufacturing line 105, etc. Hence, no deep details in this respect are provided in the present disclosure.

Same or similar considerations as the ones provided before regarding operational parameters, apparatuses and setting parameters may be generally and conceptually applied to manufacturing process results. Any skilled person knows very well which manufacturing results are considerable and definable in the context of manufacturing processes, and how they are representable and assessable via corresponding data (includable in output datasets representing manufacturing results). These manufacturing results and data representing said results may, of course, depend on the product or piece to be produced, technical specs of the manufacturing line 105, etc. Hence, no deep details in this respect are provided in the present disclosure.

Apart from operational parameters automatically measurable at the manufacturing line 105, non-automatically measurable parameters may also be taken into account to control the production line 105. Examples of such other parameters may be, e.g., quality parameters visually determined and manually inputted in the system by an operator, parameters inferred by external systems (e.g., quality control systems), setting parameters of apparatuses 106 - 108 forming the manufacturing line 105, etc. Any skilled person knows very well which non-automatically measurable parameters may be used in a particular manufacturing line 105 depending on product or pieces to be produced, technical specs of the manufacturing line 105, etc. Hence, no deep details in this respect are provided in the present disclosure. The quality parameters may be received by the RLM as reward feedback.

First configuration module 101 may be adapted (or configured) to configure a first computing module (or system) which implements a Surrogate Model (also referable to as SM herein). Said configuring may be based on training the SM using dataset pairs from a simulation or simulations of the manufacturing process. Such simulation(s) may be, e.g., Finite Element or Numerical or Computational Fluid Dynamics simulation(s) or any possible combination thereof. The dataset pairs used to configure the first computing module may include each an input dataset and an output dataset related or correlated to each other. The input dataset in each of the dataset pairs may correspond to (or define or represent) an operational state and setting of the simulated manufacturing line, and the output dataset in the same dataset pair may correspond to (or define or represent) a result of the manufacturing process produced by the simulation from the input dataset in the dataset pair (i.e., related or correlated to the output dataset).

It is well-known by any skilled person what is a SM and, in particular, an Al-base SM and how it may be computationally implemented and trained to perform as targeted in the context of controlling manufacturing processes. Hence, no deep details in this respect are provided in the present disclosure.

Reconfiguration module 102 may be adapted (or configured) to reconfigure the first computing module by retraining the (previously trained) SM based on transfer/continual learning (also referable to as TCL herein) using dataset pairs produced by an actual (or real or experimental) production line 105 performing the manufacturing process. The dataset pairs used to configure the first computing module may include each an input dataset and an output dataset related or correlated to each other. The input dataset in each of the dataset pairs may correspond to (or define or represent) an operational state and setting of the actual production line 105, and the output dataset in the same dataset pair may correspond to (or define or represent) a result of the manufacturing process produced by the actual production line 105 from the input dataset in the dataset pair (i.e., related or correlated to the output dataset).

It is well-known by any skilled person what is TCL and how it may be computationally implemented to train or retrain a SM for it to perform as intended in the context of controlling manufacturing processes. Hence, no deep details in this respect are provided in the present disclosure.

TCL may be applied in scenarios described in other parts of the disclosure, e.g., by performing a fine-tuning of the (previously trained) SM using the dataset pairs from the actual production line(s), or by performing a domain adaptation to align distributions between the dataset pairs from simulation(s) and the dataset pairs from actual production line(s), or by using a generative model configured to learn knowledge on distribution of the dataset pairs from the actual production line and to transfer said knowledge to the SM that has been previously trained using dataset pairs from simulation(s).

According to above considerations regarding modules 101 and 102, the first computing module is reconfigured (by the reconfiguration module 102) in such a manner that the SM ends up modelling transitions from operational states to manufacturing process results according to knowledge learned by the SM from simulation data (via its training by the first configuration module 101) and from actual data (via its retraining by the reconfiguration module 102). Transitions modelled by the retrained SM may be one-to-one transitions, i.e., from single operational state to single manufacturing process result.

Training data from simulation(s) may be (much) more substantial or abundant than training data from actual manufacturing line(s) 105, since the obtaining of simulation data is (much) less costly than the obtaining of actual data (i.e., data from actual manufacturing line 105). Data acquisition in actual manufacturing line(s) 105 may be very costly in terms of, e.g., energy consumption, human resources, waste of raw material and time. Alternatively, amount of simulation data and actual data may be similar to each other or, in certain scenarios, volume of actual data may be even greater than quantity of simulation data. For example, in cases where very high accuracy is required, or simulations are very complex to perform, or similar situations, volume of actual data may be larger than amount of simulation data in the training and retraining of the SM implemented by or at the first computing module or system.

Control methods (and systems and computer programs) proposed herein are thus based on firstly training the SM using simulation data and secondly (re)training the SM using actual data. Said first training enables the SM to have same or similar operational behaviour as the simulation(s) from which training data proceeds, thereby causing the SM to perform as a good approximation of the actual manufacturing line 105. Said second (re)training using actual data causes the SM to learn in such a manner that deviations or gaps in/from simulation environment with respect to actual environment are compensated for.

On one hand, training data from actual environment may be scarce and/or may not include all possible operational states in operational parameter (or state) space because it is not easy to provoke all of them in actual manufacturing line 105. For example, extreme ranges of operational parameters may be complex to recreate in actual environment. On another hand, training data from simulation environment may diverge or deviate to certain extent with respect to those from the actual environment. For example, simulation data may include non-sense or low-sense or rather useless data from actual environment perspective. These drawbacks are solved or at least attenuated in control methods, systems and computer programs according to present disclosure.

Experiments and actual implementations of the proposed solutions have surprisingly revealed that the training of the SM using simulation data and the subsequent retraining of the SM using actual data enrich each other, while providing more efficient and reasonably accurate performance. Said enrichment has been confirmed to occur in terms of minimizing or attenuating the aforementioned drawbacks from both simulation environment and actual environment. Therefore, control methods, systems and computer programs proposed herein provide improved efficiency while keeping good or acceptable accuracy in comparison to prior art manners of automatically controlling a discontinuous manufacturing process.

The configuring of the first computing module (by the first configuration module 101) and/or the reconfiguring of the first computing module (by the reconfiguration module 102) may be performed based on Supervised Machine Learning models, or Generative models, or Unsupervised Machine Learning models, or any combination thereof.

Regarding Supervised Machine Learning models, data coming from simulation or actual environments may be labelled. In this scenario, models such as Logistic Regression, Random Forest, Gradient Boosting, Deep Neural Networks may be very useful to approximate the behaviour of complex dynamics and provide a faster and more efficient response in comparison to performing complete simulations or actual manufacturing processes.

In relation to Generative Models, synthetic data samples may be created with models such as generative adversarial networks (GANs) or variational autoencoders (VAEs) to train later the RLM at the second configuration module 103. Besides providing a fast response from the environment, these models are helpful to overcome actual data scarcity and to fill missing operational states and manufacturing results in the input and output datasets, respectively.

With respect to Unsupervised Machine Learning models, they may be useful in preliminary steps of the training of the SM, e.g., for data preprocessing, feature engineering, outlier detection and exploratory analysis. Therefore, Unsupervised Machine Learning models may be used in combination with Supervised Machine Learning models and/or Generative Models to perform complete training and retraining of the SM.

Second configuration module 103 may be adapted (or configured) to configure a second computing module (or system) that implements a Reinforcement Learning Model (also referable to as RLM herein). This configuring may be based on training the RLM using the previously retrained SM (which models a mapping from operational states to manufacturing process results). Said training may include iterations of inputting an operational state to the RLM for it to generate setting values therefrom and receiving by the RLM feedback from the SM, the feedback informing about whether said setting values satisfy an optimization criterion.

The RLM and its computational implementation and training using the (previously trained and retrained) SM to perform as targeted in the context of controlling manufacturing processes may be performed by applying any of the known techniques of the state of the art..

In some examples, the configuring of the second computing module by training the RLM using the (previously retrained) SM may be performed further considering a reward function. In these implementations according to reward approach, the configuring of the second computing module by training the RLM may be performed as an optimization process constrained by the SM with the objective of maximizing the reward function. Still in these implementations, the second computing module may be provided with the reward based on value or based on several values at a previous iteration for it to produce setting values that optimize the reward function at present iteration.

Control module 104 may be adapted (or configured) to control the discontinuous manufacturing process by performing iterations of receiving operational measurements from sensors measuring the operational parameters at the manufacturing line 105, providing the operational measurements to the previously configured second computing module for causing it to output settings to be applied 105 and, furthermore, configuring the manufacturing line 105 based on the setting values outputted by the second computing module.

The controlling of the discontinuous manufacturing process by performing iterations may further include receiving, at each of the iterations, reward value representing cost(s) or performance of the manufacturing process. The reward value or reward values received throughout the iterations may define a reward function of the manufacturing process (reward approach). In examples according to reward approach, the second computing module may be further provided at each of the iterations with the reward based on a value or reward based on several values received at previous iterations. In examples, a reward function is applied to each iteration or cycle, not to the entire manufacturing process

In examples, the controlling of a discontinuous manufacturing process may include controlling closure and opening of a die in hot stamping of metal sheets to form a final piece. In these hot stamping implementations, the operational parameters defining the operational states may include at least one of the following parameters: temperature of the metal sheet when it reaches the die, temperature of the die at same time the metal sheet reaches the die, and number of remaining metal sheets in current batch. In such hot stamping implementations, the setting parameters through which the manufacturing line is configurable may include at least closure time of the die, which may depend on the final piece to be formed. For example, in some implementations, closure time of the die may range from 5 to 15 seconds.

In implementations of control methods for controlling closure and opening of a die in hot stamping, a reward function may be considered in same or similar manner as explained in other parts of the description with reference to reward approach. This reward function may depend on at least one of the following two parameters: time of formation of the final piece and whether the final piece is manufactured within or outside a temperature threshold constraint.

In hot stamping implementations, the (Al-based) Surrogate Model may consist in two DNNs that may predict the final temperature of the piece and the die using as inputs initial temperature of the die, initial temperature of the piece, forming time, and cooling time. These DNNs may be 3-layer fully connected neural networks, which may be composed by an input layer of 4 neurons corresponding to the mentioned 4 input variables and, e.g., two hidden layers of 32 neurons, which may have ReLU activation functions. The training of this (Al-based) SM may be performed through pre-training and fine-tuning approach described in other parts of the disclosure.

In hot stamping implementations, operational and setting parameters other than the ones already described may be considered. These other operational parameters defining operational states of the manufacturing process may include, e.g., temperature evolution during process steps other than die closure and opening, maximum die temperature or temperature distribution along its surface, etc. These other setting parameters to configure apparatuses 106 - 108 in the manufacturing line 105 may include, e.g., cooling time between the end and the start of two stamping cycles, stamping pressure of the hydraulic press or temperature of the refrigeration channels of the die, etc.

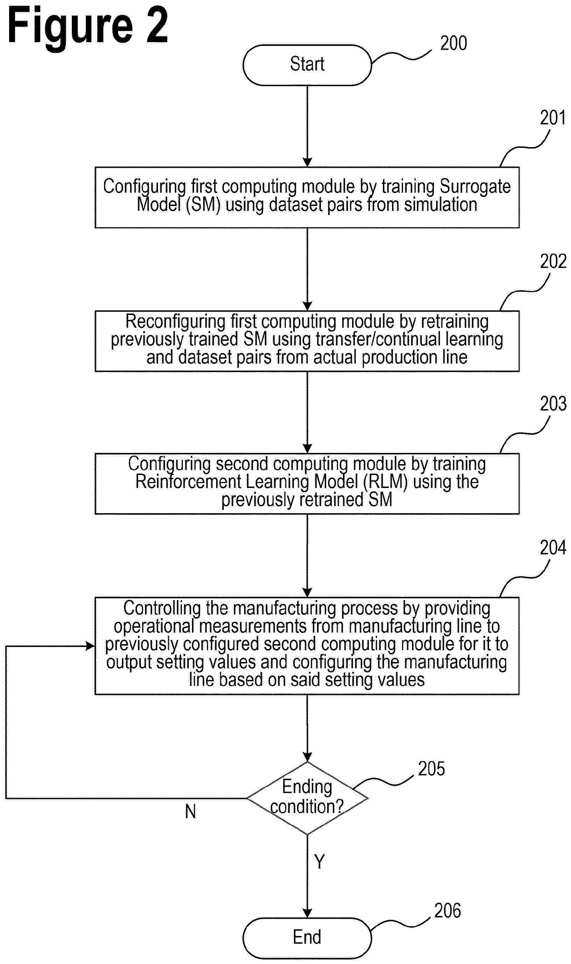

Figure 2 is a flow chart schematically illustrating methods of controlling a discontinuous manufacturing process performed by or at a manufacturing line 105. The manufacturing line 105 may have or experience operational states each defined by operational parameters measurable at the manufacturing line 105. The manufacturing line 105 may be configurable via setting parameters. As shown in the figure, control methods may be initiated (e.g., at block 200) upon detection of a starting condition such as, e.g., a user request to start the control method. Since control methods according to Figure 2 are performable by or at control systems according to, e.g., Figure 1, number references from Figure 1 may be reused in following description of Figure 2.

Control methods may further include (e.g., at method block 201) configuring a first computing module that implements a Surrogate Model (SM), said configuring based on training the SM using dataset pairs from a simulation of the manufacturing line performing the manufacturing process, according to explanations provided in other parts of the disclosure. This configuring functionality implemented or implementable at method block 201 may be performed by, e.g., first configuration module 101 previously described with reference to Figure 1. Functional details and considerations explained about said first configuration module 101 may thus be similarly attributed or attributable to method block 201.

Control methods may still further include (e.g., at method block 202) reconfiguring the first computing module by retraining, based on transfer/continual learning, the previously trained SM using dataset pairs from an actual production line 105 performing the manufacturing process, according to explanations provided in other parts of the disclosure. This reconfiguring functionality implemented or implementable at method block 202 may be performed by, e.g., reconfiguration module 102 previously described with reference to Figure 1. Functional details and considerations explained about said module 102 may thus be similarly attributed or attributable to method block 202.

Control methods may yet further include (e.g., at method block 203) configuring a second computing module that implements a Reinforcement Learning Model (RLM), said configuring based on training the RLM using the previously retrained SM. This configuring functionality implemented or implementable at method block 203 may be performed by, e.g., second configuration module 103 previously described with reference to Figure 1. Functional details and considerations explained about said module 103 may thus be similarly attributed or attributable to method block 203.

Control methods may furthermore include (e.g., at method block 204) controlling the discontinuous manufacturing process by performing iterations of obtaining operational measurements, providing them to the previously configured second computing module for it to output setting values, and configuring the manufacturing line 105 based on said setting values. This controlling functionality implemented or implementable at method block 204 may be performed by, e.g., control module 104 previously described with reference to Figure 1. Functional details and considerations explained about said module 104 may thus be similarly attributed or attributable to method block 204.

Control methods may additionally include (e.g., at decision block 205) verifying whether an ending condition occurs or is satisfied. In case of positive or true result (Y) of said verification, control method may proceed to method block 206 to terminate execution of the control method. Otherwise (N), control method may loop back to previous method block 204 to continue controlling the manufacturing process. Ending condition satisfaction may be determined by detecting, e.g., that user request for ending the control method has been issued.

As used herein, the term "module" or "unit" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding control systems proposed herein, and/or to other components that may be local or remote to one another. Additionally, the modules may be moved from one device and added to another device, and/or may be included in both devices, associated to corresponding control systems proposed herein. Any software implementations may be tangibly embodied in one or more storage media, such as, e.g., a memory device, a floppy disk, a compact disk (CD), a digital versatile disk (DVD), or other devices that may store computer code.

Control systems according to present disclosure may be implemented by computing means, electronic means or a combination thereof. The computing means may be a set of instructions (e.g., a computer program) and then control systems may comprise a memory and a processor, embodying said set of instructions stored in the memory and executable by the processor. These instructions may comprise functionality or functionalities to execute corresponding control methods such as, e.g., the ones described in other parts of the disclosure.

In control systems implemented only by electronic means, a controller of the system may be, for example, a CPLD (Complex Programmable Logic Device), an FPGA (Field Programmable Gate Array) or an ASIC (Application-Specific Integrated Circuit).

In control systems that are a combination of electronic and computing means, the computing means may be a set of instructions (e.g., a computer program) and the electronic means may be any electronic circuit capable of implementing corresponding steps of control methods proposed herein, such as those described in other parts of the disclosure.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing control methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means. When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, control methods proposed herein.

Although only a number of examples have been disclosed herein, other alternatives, modifications, uses and/or equivalents thereof are possible. Furthermore, all possible combinations of the described examples are also covered. Thus, the scope of the disclosure should not be limited by particular examples, but it should be determined only by a fair reading of the claims that follow.

## Claims

1. Method of controlling a discontinuous manufacturing process performed by or at a manufacturing line that is configurable via settings and the manufacturing line having operational states during the performing of the manufacturing process, each of said operational states being defined by operational parameters measurable at the manufacturing line, the method comprising:
configuring a first computing module or system that implements a Surrogate Model, SM, said configuring based on training the SM using dataset pairs produced by a simulation of the manufacturing line performing the manufacturing process, each of said dataset pairs including an input dataset comprising an initial operational state and settings of the simulated manufacturing line and an output dataset comprising a result of the manufacturing process produced by the simulation from said operational state and settings, the result comprising a final operational state;
reconfiguring the first computing module by retraining, based on applying transfer/continual learning, the trained SM using dataset pairs produced by an actual production line performing the manufacturing process, each of said dataset pairs including an actual input dataset comprising an actual initial operational state and actual settings of the actual production line and an output dataset comprising to an actual result of the manufacturing process produced by the actual production line based on the actual operational state and the actual settings, the actual result comprising an actual final operational state;
configuring a second computing module or system that implements a Reinforcement Learning Model, RLM, said configuring based on training the RLM using the retrained SM, the training the RLM including iteratively receiving, by the RLM, an operational state produced by the SM, receiving a reward by the RLM, and producing, by the RLM, produced settings to be provided to the SM; receiving by the SM the produced settings; providing, by the SM, a new operational state based on the produced settings, to be received by the RLM; and receiving a new reward feedback by the RLM;
wherein the new reward feedback indicates whether the new operational state produced by the SM and the produced settings satisfy a reward function optimization criterion; and
controlling the discontinuous manufacturing process by performing iterations of:
receiving operational states defined by operational parameters measured by sensors at the manufacturing line, by the configured second computing module;
outputting, by the second computing module, settings to be applied, and
configuring the manufacturing line based on the settings to be applied.

2. The method of controlling a discontinuous manufacturing process according to claim 1 wherein receiving reward feedback and receiving the new reward feedback by the RLM comprises receiving the reward feedback or the new reward feedback from the SM, or from the manufacturing line or from a quality prediction system.

3. The method of controlling a discontinuous manufacturing process according to claim 1 wherein configuring the second computing module comprises:
iteratively receiving, by the RLM, and in a current iteration, an operational state and reward feedback produced by the SM in a previous iteration;
iteratively producing, by the RLM, produced settings to be provided to the SM in the current iteration; and
iteratively providing, by the SM, a new operational state and a new reward feedback based on the produced settings, in a following iteration.

4. The method of controlling a discontinuous manufacturing process according to any of claims 1 to 3, wherein the number of dataset pairs produced by the simulation is less than the number of the dataset pairs produced by the actual production line.

5. The method of controlling a discontinuous manufacturing process according to any of claims 1 to 4, wherein the configuring and/or the reconfiguring of the first computing module is performed based on Supervised Machine Learning models, or Generative models, or Unsupervised Machine Learning models, or any combination thereof.

6. The method of controlling a discontinuous manufacturing process according to any of claims 1 to 5, wherein the configuring of the second computing module is performed based on Q-learning, Deep QLearning o DeepQNetwork, Proximal Policy Optimization, Soft Actor Critic, or any combination thereof.

7. The method of controlling a discontinuous manufacturing process according to any of claims 1 to 6, wherein the applying of transfer/continual learning includes:
performing a fine-tuning of the trained SM using the dataset pairs from the actual production line; or
performing a domain adaptation to align distributions between the dataset pairs from the simulated manufacturing line and the dataset pairs from the actual production line; or
retraining the SM based on a generative model that learns knowledge on distribution of the dataset pairs from the actual production line and transfers said knowledge to the SM.

8. The method of controlling a discontinuous manufacturing process according to any of claims 1 to 7, wherein the controlling of the discontinuous manufacturing process by performing iterations further includes receiving, at each of the iterations, reward feedback representing costs or performance of the manufacturing process.

9. The method of controlling a discontinuous manufacturing process according to claim 8, wherein the reward feedback received defines a reward function of the manufacturing process.

10. The method of controlling a discontinuous manufacturing process according to claim 9, wherein the second computing module is provided with reward feedback received at a current iteration for the second computing module to produce settings to be applied that optimize the reward function at the current iteration and at a next iteration.

11. Method of controlling a discontinuous manufacturing process according to claim 10, wherein the reward values received by the second computing module are produced by a quality prediction system configured to predict quality indicators of the manufacturing line to occur in next iteration or iterations.

12. Method of controlling a discontinuous manufacturing process according to any of claims 1 to 11, wherein the discontinuous manufacturing process includes closing and opening a die in hot stamping of metal sheets to form a final piece; wherein
the operational parameters defining the operational states include temperature of the metal sheet when metal sheet reaches the die, temperature of the die at same time the metal sheet reaches the die, and number of remaining metal sheets in current batch; and wherein
the setting parameters comprise closing time of the die.

13. Method of controlling a discontinuous manufacturing process according to claim 12, further taking into account a reward function depending on time of formation of the final piece and on whether the final piece is manufactured within or outside a temperature threshold constraint.

14. System for controlling a discontinuous manufacturing process performed by or at a manufacturing line that is configurable via setting parameters and has operational states that are experienceable by the production line during the performing of the manufacturing process, each of said operational states being defined by operational parameters measurable at the manufacturing line, the system comprising:
a first configuration module configured to configure a first computing module or system that implements a Surrogate Model, SM, said configuring based on training the SM using dataset pairs produced by a simulation of the manufacturing line performing the manufacturing process, each of said dataset pairs including an input dataset comprising an initial operational state and settings of the simulated manufacturing line and an output dataset comprising a result of the manufacturing process produced by the simulation from said operational state and settings, the result comprising a final operational state;
a reconfiguration module adapted to reconfigure the first computing module by retraining, based on applying transfer/continual learning, the trained SM using dataset pairs produced by an actual production line performing the manufacturing process, each of said dataset pairs including an actual input dataset comprising an actual initial operational state and actual settings of the actual production line and an output dataset comprising to an actual result of the manufacturing process produced by the actual production line based on the actual operational state and the actual settings, the actual result comprising an actual final operational state;
a second configuration module adapted to configure a second computing module or system that implements a Reinforcement Learning Model, RLM, said configuring based on training the RLM using the retrained SM, the training the RLM including iteratively receiving, by the RLM, an operational state produced by the SM, receiving a reward by the RLM, and producing, by the RLM, produced settings to be provided to the SM; receiving by the SM the produced settings; providing, by the SM, a new operational state based on the produced settings, to be received by the RLM; receiving a new reward feedback by the RLM; wherein the new reward feedback indicates whether the new operational state produced by the SM and the produced settings satisfy a reward function optimization criterion; and
a control module adapted to control the discontinuous manufacturing process by performing iterations of:
receiving operational states defined by operational parameters measured by sensors at the manufacturing line, by the configured second computing module;
outputting, by the second computing module, settings to be applied, and
configuring the manufacturing line based on the settings to be applied.

15. Computer program comprising program instructions for causing a system or computer system or controller to perform a method according to any of claims 1 to 13 of controlling a discontinuous manufacturing process performed by or at a manufacturing line.
